# EUROPEAN PATENT APPLICATION

(11) **EP 2 665 042 A1**
(43) Date of publication of application: **20.11.2013**
(21) Application number: 12003805.4
(22) Date of filing: 14.05.2012
(51) Int. Cl.: G06T 19/00, G06Q 10/00

(54) **Visual processing based on interactive rendering**

(71) Applicant: Crytek GmbH, 60322 Frankfurt am Main (DE)
(72) Inventor: Yerli, Faruk, 60314 Frankfurt (DE)
(74) Representative: Schmidt, Steffen

(57) **Abstract**

The invention relates to visual processing and simulation based on interactive rendering. In particular, a method for rendering of data in an interactive environment is defined, comprising the steps of retrieving a plurality of data elements, each data element comprising values indicative of characteristics of at least one entity, receiving an indication of a level of detail for rendering of the plurality of data elements, generating a visual container representing the characteristics of the at least one entity, aggregating at least some of the data elements within the visual container in response to the indication of the level of detail, and rendering the visual container in the interactive environment. Furthermore, a computer-readable medium and a system hosting an interactive environment are defined.

## Description

### TECHNICAL FIELD

The present invention relates to a method for rendering of data in an interactive environment, and, in particular, to a system hosting an interactive environment. Moreover, the intention may relate to visual processing, such as interactive simulation and real-time management of complex data based on interactive rendering.

### BACKGROUND

Interactive environments can increase the efficiency of information communication and processing of rendered data. However, current text and two-dimensional approaches do not allow for a full processing and exploration of respective real data. Thus, there is a need in the art for further development and improvement of state of the art interactive systems that follow common data management & interaction paradigms, for example, based on dialog systems.

### SUMMARY

The problem is solved by a method, a computer-readable medium, and a system as defined in the independent claims. Preferred embodiments are defined in the corresponding dependent claims.

A first aspect of the present invention provides a method for rendering of data in an interactive environment. The inventive method comprises the steps of retrieving a plurality of data elements, each data element comprising values indicative of characteristics of at least one entity; receiving an indication of a level of detail for rendering of the plurality of data elements; generating a visual container representing the characteristics of the at least one entity; aggregating at least some of the data elements within the visual container in response to the indication of the level of detail; and rendering the visual container in the interactive environment.

The inventive method may relate to interactive visualization and/or simulation and preferably renders the visual container in multiple layers and/or levels of data. The method may enable an interactive user environment where users can directly interactively influence the level of detail of the rendered data in the visual container.

Each data element may reflect one characteristic of an entity. Correspondingly, the characteristics of one entity may be represented by a plurality of data elements. Therefore, if multiple entities are present, each entity may be associated with a plurality of distinct groups of data elements representing the respective characteristics. Each entity may represent an organization, a process, an object, or an individual of the real world, such as an enterprise, a company, a salesman, a manufacturing site and other physical items. Similarly each entity is assigned a set of characteristics and corresponding values, such as performance data and physical values and properties and corresponding performance indicators and measurements, respectively. The entities or the characteristics may, for example, represent customers, accounts, orders, stock levels, work in progress (WIP), staff etc. and respective values.

The visual container may be configured to represent data elements that may related to the respective set of characteristics of one entity. For example, the visual container may combine data values related to a manufacturing site. Likewise, the visual container may also combine data elements of two or more entities. For example, on-line measurement data collected from a plurality of sites may be combined in one visual container, wherein each measurement site may be regarded as an entity. Likewise, a visual container may represent a large organizational structure represented by the visual container and the entities may correspond to respective organisational units of the structure.

The indication of the level of detail may be received, for example, as a direct input from a user or may be automatically derived from the interactive environment. For example, the interactive environment may determine a parameter of current field of view or view area and in response to the parameter may adjust the current level of detail to a suitable value, such as pre-set values associated with the interactive environment. The values may be, for example, numerical values, such as integers or real number ranging from 0 to a certain boundary, for example, 0 to 1. The user may be enabled to update the level of detail value any time. Also, the interactive environment may automatically update the level of detail value at a regular basis.

Based on the current level of detail value, at least some of the data elements are aggregated within the visual container. For example, based on threshold values several data elements may be selected and used for further processing. Also, for the aggregated data elements different visualization objects may be automatically selected in response to the current level of detail.

The visual container may combine and integrate representations of each aggregated data element, such as one or more visual objects for each data element, and may be passed on to a renderer or other processing component capable of rendering the visual container and the visual objects therein. The visual container may be interactively rendered within the interactive environment in real-time. For example, the interactive environment may enable a user to interact with particular rendered objects, to change the view position, a field of view, and other visual, processing and simulation characteristics of the simulation environment. Thus, a user may directly and interactively explore the rendered visual container and the visual objects therein. Furthermore, a set of further characteristics may be associated with the visual container and may be used to further adjust the rendering of the visual container.

The method allows for a flexible and efficient visual processing of real data structures in interactive environments. It greatly improves interaction and provides the ability to visualize a large amount of complex data, such as instances of data, related to one or more entities with multiple characteristics. Also, the inventive method allows to advantageously aggregate data in a visual way, and to allow a direct and deeper interrogation of the data by navigating through the simulated world. In particular, in comparison with current techniques the inventive approach increases the efficiency of information communication through "at a glance" characteristics of the interactive rendering in the simulated environment.

In a preferred embodiment, the method further comprises receiving a further indication of another level of detail, aggregating, in real-time, at least some of the data elements within the visual container in response to the further indication and rendering the updated visual container. Hence, the user may interact with the environment or the environment may regularly and automatically determine current level of detail values, and the environment may be configured to update the visual container and the visual objects therein according to the new values. For example, other data elements that have not be previously displayed may be aggregated within the visual container if the level of detail raises. Likewise, data elements may be removed from the visual container. Also, different representation of particular data elements of the visual container may be changed or updated in response to the new value. Each update or change is preferably performed in real-time in order to allow a seamless rendering of the visual container and of the interactive environment.

According to a particularly preferred embodiment, the method further comprises generating a further visual container representing at least some characteristics of at least one of the entities in response to the level of detail. Based on the current level of detail the visual container may be split into two or more visual containers. A visual container comprising data elements of two entities may, for example, be split into two visual containers, each comprising data elements of one of the entities if the level of detail is raised above a certain level or threshold.

According to another embodiment, the method further comprises merging the visual container and the further visual container in response to the level of detail. Hence, selected data can be aggregated both up and down, for example less detail or more detail, by, for example, "zooming in and out" and clicking on data elements as required. Correspondingly, the interactive environment may automatically determine a suitable level or detail or the level of detail may be directly set by the user. The visual containers may be controlled by sliders or other interactive elements that may control the "zoom" or level of detail, such as ranging from 100% to 0% or between 1.0 and 0.0. Decreasing the "zoom" level (zooming out) may merge the visual containers and aggregate the data within. Likewise, increasing the "zoom" level may add visual containers to the interactive environment. The data elements in each added or merged visual container may be set by the interactive environment or may be determined by the user or client.

In yet another embodiment, the method further comprises rendering at least one layer of data and overlaying the rendering of the visual container onto the at least one layer of data. For example the visual container or two or more visual containers may be rendered on an overlay medium. The visual containers may represent the data elements required by the client.

According to a particularly preferred embodiment, the interactive environment is a three-dimensional (3D) interactive environment and the visual container is rendered in 3D. The data elements may be displayed through simple 3D objects that have their own characteristics such as shape, size, color, and/or radiance. Furthermore, visual objects representing, for example, fire, water, and/or luster may be used that can represent a chosen factor and/or situation and/or condition as required.

Preferably, at least one of the data elements aggregated within the visual container is represented as a 3D mesh.

In yet another preferred embodiment, the method further comprises scaling a representation of one of the data elements aggregated within the visual container in response to a ratio of the values of the aggregated data element and a target value of the respective characteristic of the at least one entity. For example, the data element for a characteristic *c* may represent a vector of values *x*_*c* = (*x*1, ..., *x*n). The interactive environment may store several target values for respective characteristics, for example, the value *x*_*c*_max for the characteristic *c*. The scale factor may be chosen to depend on *x*_*c*/*c*_*c_*max.

In a further embodiment, the method further includes overlaying the rendering of the visual container with a circumferential graphical object representing a joint characteristic of the data elements aggregated within the visual container. The data elements of the visual container may be further visualized and/or characterized by effects surrounding the visual objects associated with the data element, such as a 3D image and/or icon. The effects may comprise one or more of a fire, an erosion, a luster, radiance etc. Furthermore, the visual objects representing a data element may be displayed in simple dynamic characteristics of 3D objects, such as shape, size, color and further effects such as weather, or 'shininess'.

According to a preferred embodiment, the method further comprises receiving an indication of a mode and in response to the indication of the mode selecting at least some of the data elements for aggregation within the visual container. A Visualization Mode Selector may allow users to enter different modes, such as customer confidence, products or sales or any other selection of criteria defining a group of characteristics which are to be aggregated within respective visual containers. For example, the user may select one of three Visualization Modes, which may determine the visualized data. The modes may also define a default level of detail. The visualization modes may further define the visual containers to include further visual objects, such as 3D objects, that are placed on the overlay medium or on any other visualization layer or overlay.

In a preferred embodiment, at least one of the data elements aggregated within the visual container is represented by an interactive element, and receiving an event responsive to an interaction with the interactive element. For example, the visual objects, such as meshes and other 3D representations, may be associated with interactive elements enabling a user to directly trigger an action related to the respective data element. The interaction may comprise any suitable interaction technique provided by the interactive environment. For example, in regard to tablet-based devices all interaction may be finger slide and finger tap based. Hence, zooming in and out may be finger driven. Tapping on or touching an interactive element associated with a visual object for e.g. a building may cause further data for that data element or entity to be displayed. Other interaction techniques may be used, such as indirect interaction using a mouse or other pointing device, or enhanced interactions such as gesture recognition and others.

According to a particularly preferred embodiment, the method further comprises interrogating further data related to the at least one aggregated data element in response to the event.

According to another embodiment, the method further comprises initiating an activity related to the at least one entity associated with the at least one aggregated data element in response to the event. After interaction, the associated data element may be further analyzed for respective activities and actions. For example, other information such as contact details, the ability to email, phone, start a campaign, offer a discount etc. may be presented on the overlay medium as an icon or any other visual and interactive element. Clicking on or touching the interactive element may initiate the next stage of that particular process. Also, if only one activity is defined with regard to a particular data element, this activity may be directly started by the interactive environment.

In yet another embodiment, each data element is a multi-dimensional complex data element. Hence, large amounts of complex data can be visualized in an interactive way according to the inventive approach. Each data element may represent a vector of a n-dimensional space, wherein n may range between 10 and 500, preferably 20, 50, or 100, or may even represent a space of several thousands of dimensions. In addition or as an alternative the complex data elements may represent heterogeneous data, which may be represented as complex data object, including a set of numerical and/or alphanumerical values. In addition the complex data elements may comprise links and pointers to other data elements and may comprise processing logic, such as scripts or methods and other logic, which may automatically derive further data and measures related to the data elements. Furthermore, the number of data elements may range from a few data elements to hundreds, thousands, millions or more of data elements. The interactive environment is configured to handle such large amounts of data interactively by, for example, applying a level of detail approach, by using proxies or enabling a distributed processing and rendering.

According to a particularly preferred embodiment, the data elements are retrieved from a data base.

Preferably, the interactive environment is driven by a real-time computer graphics engine.

According to another aspect, a computer-readable medium having instructions stored thereon is provided, wherein said instructions, when installed on a computing device and in response to execution by the computing device, cause said computing device to automatically perform a method for rendering of data in an interactive environment according to an embodiment of the present invention. In particular, the instructions may represent any processing step according to one or more of the embodiments of the disclosure in any combination.

The computing device may either remotely or locally access the computer-readable medium and transfer the instructions to a memory, such that the online service is configured to execute the method. Preferably, the method comprises the processing steps of retrieving a plurality of data elements, each data element comprising values indicative of characteristics of at least one entity; receiving an indication of a level of detail for rendering of the plurality of data elements; generating a visual container representing the characteristics of the at least one entity; aggregating at least some of the data elements within the visual container in response to the indication of the level of detail; and rendering the visual container in the interactive environment.

According to yet another aspect of the present invention, a system hosting an interactive environment comprises a data interface configure to retrieve a plurality of data elements, each data element comprising values indicative of characteristics of at least one entity; an input interface configure to receive an indication of a level of detail for rendering of the plurality of data elements; a processing component coupled to the data interface and the input interface, said processing component being configured to generate a visual container representing the characteristics of the at least one entity, and to aggregate at least some of the data elements within the visual container in response to the indication of the level of detail; and a renderer coupled to the processing component, said renderer being configured to render the visual container in the interactive environment.

The inventive system may implement or host and interactive environment enabling a broad range of interactive capabilities in order to directly interact with the rendered visual containers and the representations of the data elements therein. Moreover, the inventive approach allows for an advantageous, fast, and flexible processing and simulation of complex data based on interactive rendering of the data.

According to a preferred embodiment, the input interface is further configured to receive a further indication of another level of detail, the processing component being further configured to aggregate, in real-time, at least some of the data elements within the visual container in response to the further indication, and the renderer being further configured to render the updated visual container.

In a preferred embodiment, the processing component is further configured to generate a further visual container representing at least some characteristics of at least one of the entities in response to the level of detail.

According to a particularly preferred embodiment, the processing component is further configured to merge the visual container and the further visual container in response to the level of detail.

According to another embodiment, the renderer is further configured to render at least one layer of data and overlaying the rendering of the visual container onto the at least one layer of data.

In yet another embodiment, the interactive environment is a three-dimensional (3D) interactive environment and the renderer is further configured to render the visual container in 3D. Each data element may, for example, be represented as a 3D mesh or any other 3D graphical object.

According to another aspect, the processing component is further configured to scale a representation of one of the data elements aggregated within the visual container in response to a ratio of the values of the aggregated data element and a total value of the respective characteristic of the at least one entity.

In yet another preferred embodiment, the renderer is further configured to overlay the rendering of the visual container with a circumferential graphical object representing a joint characteristic of the data elements aggregated within the visual container.

In a further embodiment, the input interface is further configured to receive an indication of a mode and wherein the processing component, in response to the indication of the mode, is further configured to select at least some of the data elements for aggregation within the visual container.

According to a preferred embodiment, wherein at least one of the data elements aggregated within the visual container is represented by an interactive element, and the processing component is configured to receive an event via the input interface responsive to an interaction with the interactive element.

In a preferred embodiment, the processing component is further configured to interrogate further data related to the at least one aggregated data element in response to the event.

According to a particularly preferred embodiment, the processing component is further configured to initiate an activity related to the at least one entity associated with the at least one aggregated data element in response to the event.

In yet another embodiment, the data interface is coupled to a data base. Hence, the data elements may be retrieved from the data base via the data interface.

According to a particularly preferred embodiment, the system further comprises a real-time computer graphics engine configured to drive the interactive environment.

### BRIEF DESCRIPTION OF THE DRAWINGS

The specific features, aspects and advantages of the present disclosure will be better understood with regard to the following description and accompanying drawings where:
Figs. 1A and 1B show multiple visualization layers including visual containers rendered with different level of detail according to an embodiment of the present invention;
Fig. 2 shows a plurality of visual containers according to an embodiment of the present invention;
Figs. 3A to 3C show rendering of visual containers according to another embodiment of the present invention;
Fig. 4 shows an example visual representation of a visual container according to an embodiment of the present invention;
Figs. 5A and 5B show initiation of further activities based on interactive elements associated with a visual container according to an embodiment of the present invention; and
Fig. 6 shows another exemplifying representation of a plurality of visual containers according to an embodiment of the present invention.

### DETAILED DESCRIPTION

In the following description of preferred embodiments reference is made to the drawings which show by way of illustration the specific embodiment. It is to be understood that the embodiments may include changes in design and structure without departing from the scope of the present invention as defined in the claims.

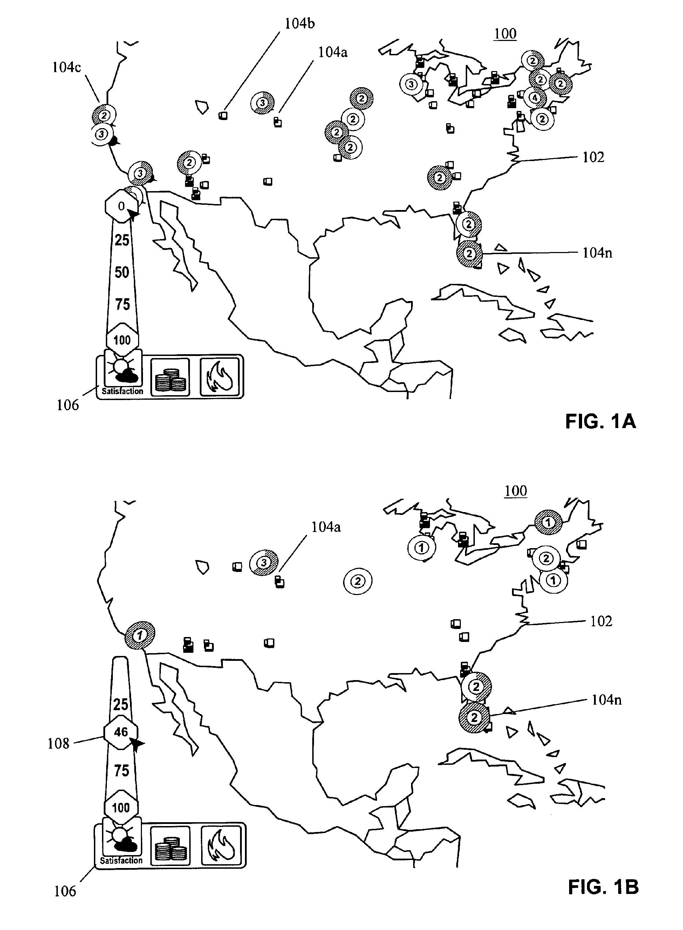

Figs. 1A and 1B show multiple visualization layers including visual containers rendered with different level of detail according to an embodiment of the present invention. The embodiment of Figs. 1A and 1B may generally refer to enterprise management or other real data and entity management. The visualization interface 100 may include a first layer 102 representing a map of a geographical area. The geographical data on the first layer 102 may be split into territories that may also be colored according to statistic-driven coloring of different territories. Hence, the geographical map could also have its terrain colored or may be rendered to represent statistical data. Similarly, any further data rendered on the first layer 102 may be further enhanced.

In addition, a plurality of visual containers 104a ... 104n may be rendered on a further overlay layer. Each visual container 104a ... 104n may include a plurality of 3D meshes representing characteristics of at least one entity to which the visual container 104a ... 104n refer. In addition and according to a set or automatically determined level of detail, the visual containers 104a ... 104n may be enhanced with further visual data on the same or on another overlay medium, which may indicate a performance associated with the entity. For example, pie charts, bar charts or any other kind of charts or data diagram could be used to represent data at a glance. Hence, the visual container 104 may be assigned a performance of "3", visual containers 104c and 104n a performance of "2" and the visual container 104b may comprise no further data related to performance.

The visual containers 104a ... 104n and the related 3D objects may be placed onto the world map of the first layer 102 in geographically appropriate locations. Various levels of visualization or zoom levels are possible. As zoom levels change the visual containers 104a ... 104n may be merged to aggregate data for regions during zoom out, and/or the visual containers 104a ... 104n may be added to the scene for each specific client, or group of clients during zoom in.

The visual containers 104a ... 104n may further comprise icons and/or images in order to suitably represent entities such as, but are not limited to, customers, accounts, orders, stock levels, work in progress (WIP), sales staff etc. Likewise, the entities may be related to any other physical and real world units, objects and/or individual. Each entity icon/image may have its own set of characteristics which may allow deeper and further interrogation of data by users. The data elements may further represent derived values which may be linked to visualization modes, including for example various key performance indicators (KPI) and respective modes such as customer confidence, products or sales. Further examples could include accounts information, sales forecasts, sales to date or any KPI related information as required.

The characteristics of each visual container 104a ... 104n may be used to represent the data values or derived values, such as the KPI. For example, high sales volume could be represented by a large building, profitability by the condition of the building or budget available as piles of money.

The interface 100 of Figs. 1A and 1B also includes an interactive element 106 which enables the user to select factors that may be used to filter the displayed visual containers 104 ... 104n according to threshold values. A user may, for example, apply an interaction technique, such as using a mouse or a touch screen, in order to adjust a slider 108 on a slide bar to select a particular parameter, for example, a particular "Satisfaction", such as "100" in Fig. 1A and "46" in Fig. 1B. The slider 108 for visualization modes may, in particular, be used to change thresholds of key indicators related to the data elements and entities. Hence, this will dynamically drop customers from the view, which are not of interest. Correspondingly, only visual containers representing entities that satisfy the parameter are rendered, such as visual containers 104a and 104n. In contrast visual containers 104b and 104b are not displayed in the interface 100 of Fig. 1B.

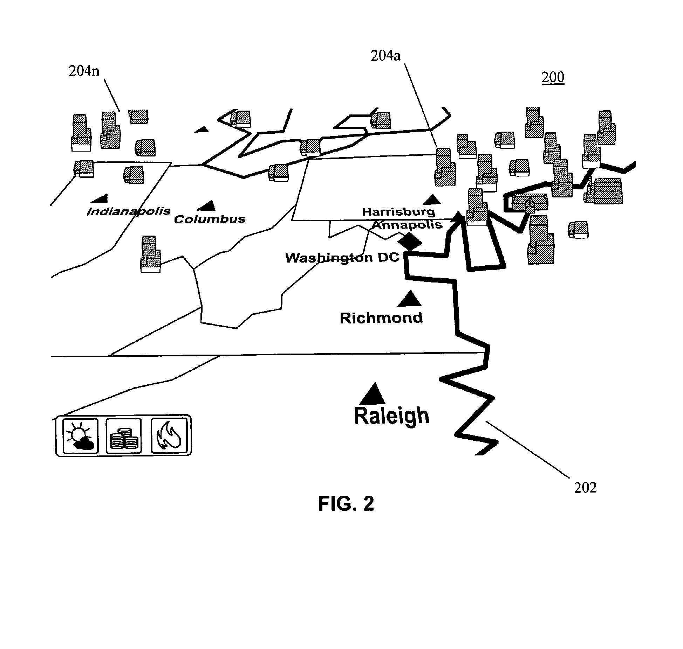

Fig. 2 shows a plurality of visual containers according to an embodiment of the present invention, similar to visual containers 104a ... 104n of Figs. 1A and 1B. Similar to the interface 100 of Figs. 1A and 1B, the interface 200 shows a first layer 202 comprising rendered geographical data and an overlay layer including visual containers 204a ... 204n. Each visual container 204a ... 204n may be represented by a 3D mesh having a particular size and form, which may be determined based on the represented data elements, derived data, and performance values of the respective one or more entities. For example, real building data may be used for respective meshes, which may be scaled according to a performance of the entity.

The user may directly interact with the interface 200, for example by moving the view point and adjusting the field of view. Each interaction may be used to update the visual containers and adjust the data elements in response to an update of the level of detail. For example, various interaction techniques may be used to zoom in to increase details, or clicking on elements to interrogate data further. Preferably, any interaction may be aligned to a one-click, multi-touch feel of tablet devices. Yet, it is to be understood that the present invention is suitable for any interaction technique.

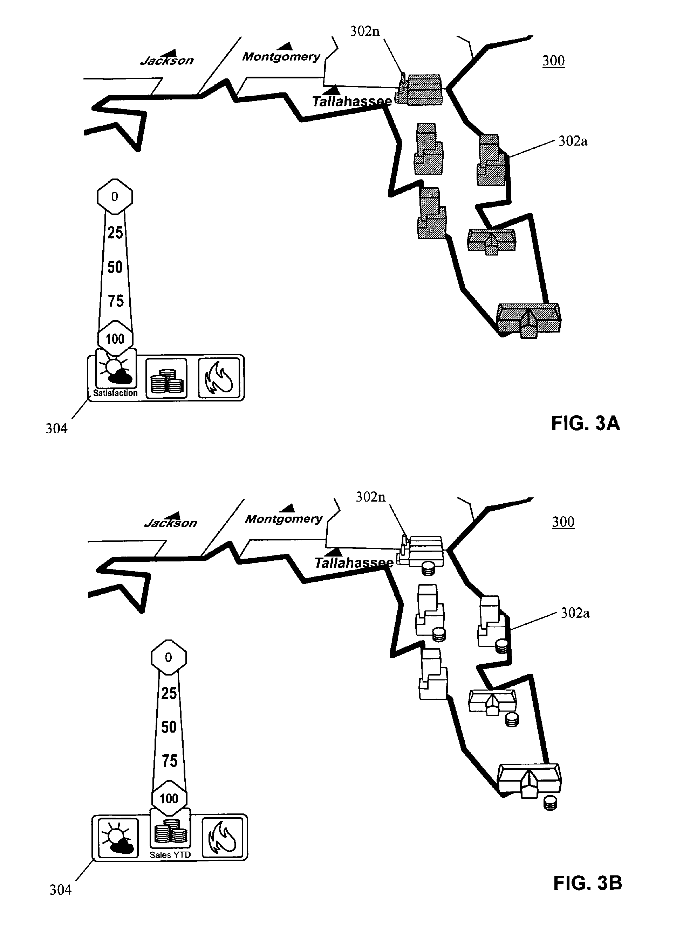

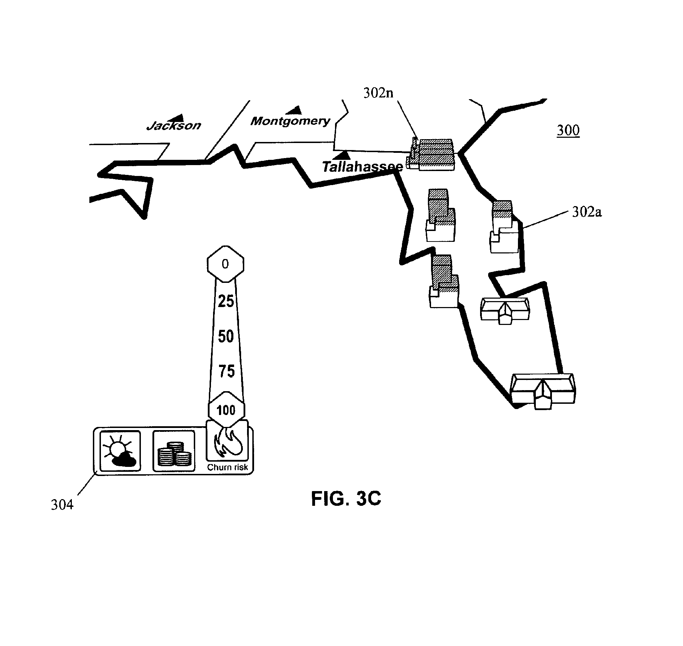

Figs. 3A to 3C show rendering of visual containers according to another embodiment of the present invention. The user or a client may, for example, interact with an interface 300 to navigate to several visual containers 302a ... 302n of a certain geographical area. The user may use an interactive element 304 to define parameters related to performance values of the entities, such as "Satisfaction" in Fig. 3A, "Sales" in Fig. 3B, and "Risk" in Fig. 3C. The user may utilize sliders of the interactive element 304 to select the respective values. According to the selected value, the visual representation of the aggregated data elements of visual container may be updated and/or adjusted. For example, the visual container 302a of Fig. 3A may include a visualization of atmospheric effects to reflect a satisfaction or dissatisfaction with the particular entity. Furthermore, as shown in Figs. 3B and 3C colors and surface effects of the visual objects may be updated according to the selected values.

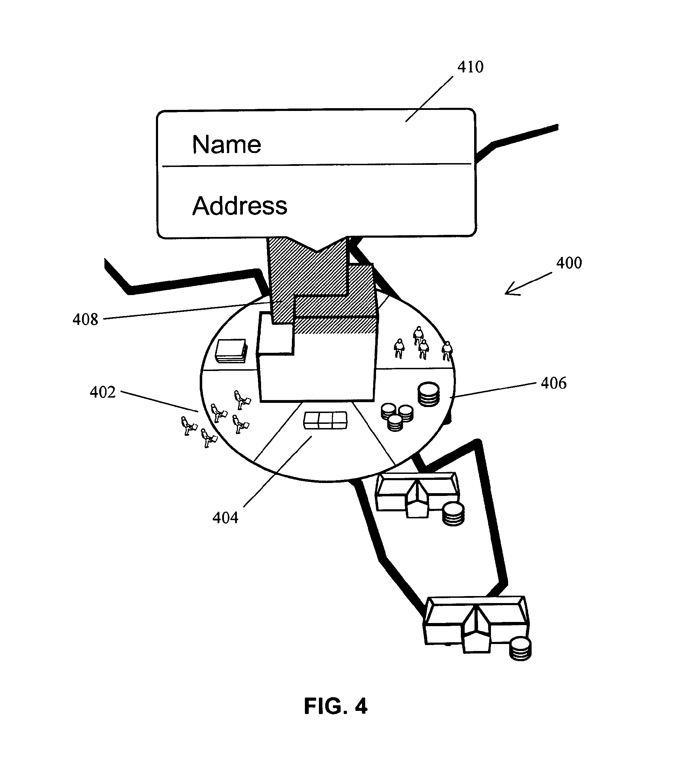

Fig. 4 shows an example visual representation of a visual container according to an embodiment of the present invention. The visual container 400 may be related to a high level of detail, showing for example information using further icons and/or images in order to represent, for example, sales staff 402 carrying products toward a customer, purchased products 404 arranged in a warehouse or contacts 406 sitting in a building. The visual container 400 may be further enhanced with additional 3D visual objects 408similar to the visualization of atmospheric effects of Figs. 3A to 3C. In addition, the visual container 400 may include a visualization of textual data 410 directly related to the entity, such as an address and other contact data.

The visual containers 400 may be rendered using a real-time graphics engine, such as the CryENGINE of Crytek GmbH. Furthermore, the overlays may be rendered with Scaleform. The effects may be either implemented separately or as unique algorithms to the rendering implementation of the real-time graphics engine.

The data elements of each visual containers 400 may be linked or otherwise connected to a data base query and the subsequent rendering. Hence, the data elements and respective values may be retrieved from the database in response to a query and the visual containers 400 may be aggregated following the answer(s) of the query. The answers and the respective data elements may depend on the real-time data from the data base available at any particular point in time. The database may be directly integrated in the interactive environment or may be provided by a third party provider. Similarly, the interactive environment may represent a client to a database application. In this case, the interactive environment may comprise data interfaces in order to retrieve the data elements as well as characteristics of the entities. For example, the interactive environment may enable any kind of XML-based input and may match with a variety of customer databases.

Visual container characteristics would be determined by threshold levels and may be further controlled by numerical value(s) and or condition statement(s) that may be represented as a database language code. Also, each visual container 400 may represent a certain aggregation of data elements. The aggregation may, for example, be implemented by a pre-set (or possibly adjustable) threshold level or an aggregation level. The threshold or aggregation level may be also linked directly to the database. Hence, the data available may be proportional to the threshold level set and level of zoom.

At a particular zoom level of a visual container 400 representing an entity, such as an individual clients, which may be represented by individual buildings, specific data may be shown. In particular, the buildings may visually encode characteristics or KPIs, which may be linked or mapped to respective visual objects. For example a mapping may map Sales Volume to a size of building, Profitability to a state of building, for example by switching to a different mesh, Satisfaction rate to an animation of a fire in the building, and an available sales budget to money piles.

Furthermore, similar to Figs. 1A and 1B a pie chart or any other diagram may be displayed above a visual container of an entity, which will expand on mouse over to show further information of the entity. Example visualization may comprise sales representatives 402 carrying new products towards the customer, purchased products 404 arranged in the production area of the building, contacts (represented by icons) positioned in the building.

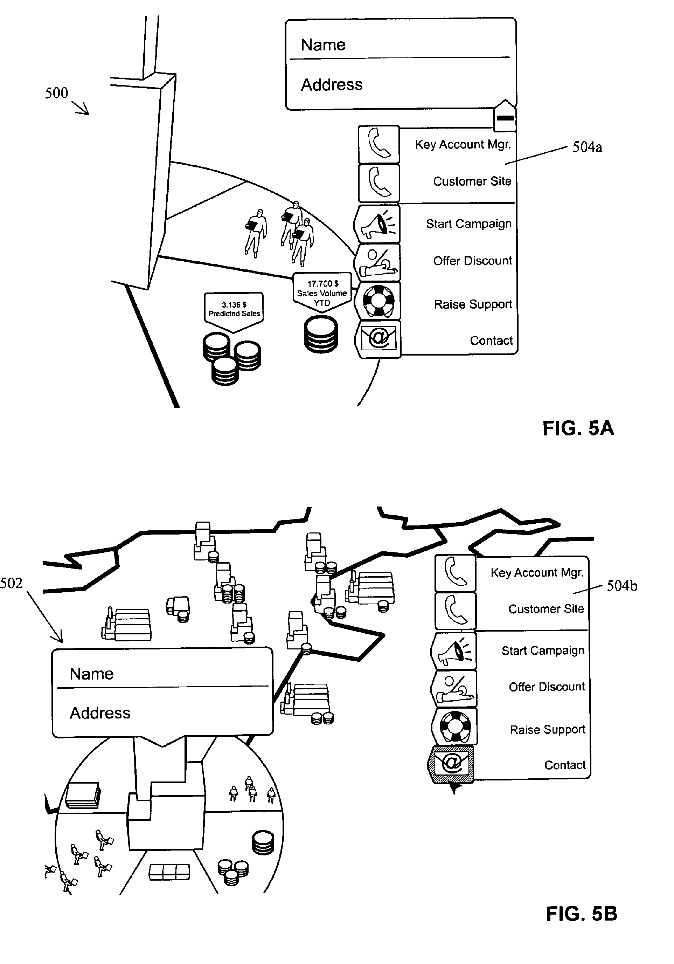

Figs. 5A and 5B show an initiation of further activities based on interactive elements associated with a visual container according to an embodiment of the present invention. Figs 5A and 5b, respectively show a detail of visual containers 500, 502 representing an entity and respective characteristics. In addition, interactive elements are added to the visual objects, such that the user may click on or touch an interactive element in order to initiate an activity, such as a phone call or writing an email. After triggering with the interactive element, a further menu 504a, 504b bar may be displayed and associated with the visual container 500, 502, respectively. The user may further select an item on the menu 504a, 504b to initiate the respective activity. The activity may be directly linked to the data of the entity. For example, a phone call may be directly started with a responsive key account manager, as defined by the element. Likewise, an email may be directly addressed to a contact of the entity.

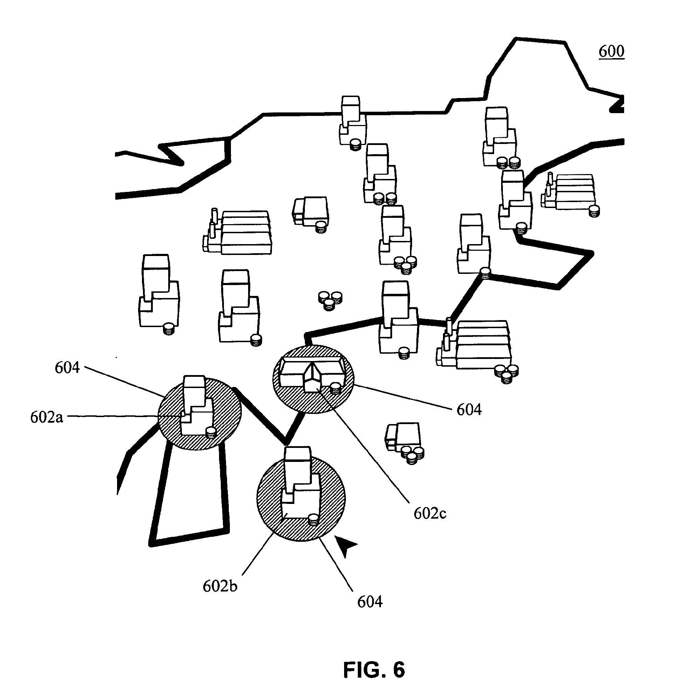

Fig. 6 shows another exemplifying representation of a plurality of visual containers according to an embodiment of the present invention. An interface 600 may comprise multiple rendering layers that may be overlaid, similar to the overlays of Figs. 1A, 1B, and 2. In addition, one or more visual containers may be selected, such as the three visual containers 602a, 602b, 602c. Each selected visual container 602a, 602b, 602c may be further marked or highlighted, such as using as indicator or cursor 604. The selected visual container 602a, 602b, 602c may be further analyzed and processed together.

The afore-discussed embodiments may be used according to a preferred use case, wherein a user may want to check on the 'Customer Satisfaction' of customers in a particular country, such as the UK. Using the overlay medium or layer the whole world customer base can be seen in a zoomed out condition within an interactive environment according to an embodiment of the present invention. By zooming in on a geographical region, such as the UK, all customers of that region may be displayed. In regard to the KPI of 'Customer Satisfaction' the user may click on the Visualization Mode Selector for the 'Customer Satisfaction' KPI, such as the interactive element 106 of Figs. 1A and 1B. Using the slider to change the customer satisfaction threshold all satisfied customers may disappear leaving only those customers who are dissatisfied. Further zooming in brings up further visual containers that could represent particular issues. For example, customers that experienced late delivery, damaged goods, or incorrect products. This allows the user to quickly identify those customers with a given issue and be able to take steps to rectify the problems(s) issues in an easy to use 3D visual environment provided by the interactive environment according to embodiments of the present invention.

While preferred embodiments have been described in many details, it has to be understood that aspects of the invention can take many forms and that many modifications may be provided to the embodiments without leaving the scope of the invention. For example, particular processing steps, data structures, interfaces, and structural characteristics may be modified, added and omitted without leaving the scope of the present invention. Similarly, processing steps of embodiments may be performed according to an altered order and structural elements may be arranged differently from the examples described. The embodiments shown herein are intended to illustrate rather than to limit the invention as defined by the claims. Rather, the invention may be practiced within the scope of the claims differently from the examples described and the described features and characteristics may be of importance for the invention in any combination.

## Claims

1. A method for rendering of data in an interactive environment comprising the steps of:
retrieving a plurality of data elements, each data element comprising values indicative of characteristics of at least one entity;
receiving an indication of a level of detail for rendering of the plurality of data elements;
generating a visual container representing the characteristics of the at least one entity;
aggregating at least some of the data elements within the visual container in response to the indication of the level of detail; and
rendering the visual container in the interactive environment.

2. The method according to claim 1, further comprising receiving a further indication of another level of detail, aggregating, in real-time, at least some of the data elements within the visual container in response to the further indication and rendering the updated visual container.

3. The method according to claim 1 or 2, further comprising generating a further visual container representing at least some characteristics of at least one of the entities in response to the level of detail.

4. The method according to claim 3, further comprising merging the visual container and the further visual container in response to the level of detail.

5. The method according to one of the preceding claims, further comprising rendering at least one layer of data and overlaying the rendering of the visual container onto the at least one layer of data.

6. The method according to one of the preceding claims, wherein the interactive environment is a three-dimensional (3D) interactive environment and the visual container is rendered in 3D, wherein at least one of the data elements aggregated within the visual container is represented as a 3D mesh.

7. The method according to one of the preceding claims, further comprising scaling a representation of one of the data elements aggregated within the visual container in response to a ratio of the values of the aggregated data element and a total value of the respective characteristic of the at least one entity.

8. The method according to one of the preceding claims, further comprising receiving an indication of a mode and in response to the indication of the mode selecting at least some of the data elements for aggregation within the visual container.

9. The method according to one of the preceding claims, wherein at least one of the data elements aggregated within the visual container is represented by an interactive element, and receiving an event responsive to an interaction with the interactive element.

10. The method according to claim 9, further comprising at least one of interrogating further data related to the at least one aggregated data element in response to the event, and initiating an activity related to the at least one entity associated with the at least one aggregated data element in response to the event.

11. A computer-readable medium having instructions stored thereon, wherein said instructions, in response to execution by a computing device, cause said computing device to automatically perform a method for rendering of data in an interactive environment according to one of the preceding claims.

12. A system hosting an interactive environment, comprising:
a data interface configure to retrieve a plurality of data elements, each data element comprising values indicative of characteristics of at least one entity;
an input interface configure to receive an indication of a level of detail for rendering of the plurality of data elements;
a processing component coupled to the data interface and the input interface, said processing component being configured to generate a visual container representing the characteristics of the at least one entity, and to aggregate at least some of the data elements within the visual container in response to the indication of the level of detail;
and
a renderer coupled to the processing component, said renderer being configured to render the visual container in the interactive environment.

13. The system according to claim 12, wherein the input interface is further configured to receive a further indication of another level of detail, the processing component being further configured to aggregate, in real-time, at least some of the data elements within the visual container in response to the further indication, and the renderer being further configured to render the updated visual container.

14. The system according to claim 12 or 13, wherein the processing component is further configured to generate a further visual container representing at least some characteristics of at least one of the entities in response to the level of detail.

15. The system according to one of the claims 12 to 14, further comprising a real-time computer graphics engine configured to drive the interactive environment.
